(19) Europäisches Patentamt
European Patent Office
Office européen des brevets

(11) Veröffentlichungsnummer: **0 345 552 B1**

(12) **EUROPÄISCHE PATENTSCHRIFT**

(45) Veröffentlichungstag der Patentschrift: **18.11.93**

(51) Int. Cl.$^5$: **C08F 220/24**, C08F 265/00, D06M 15/277

(21) Anmeldenummer: **89109459.1**

(22) Anmeldetag: **25.05.89**

(54) **Perfluoralkylgruppen enthaltende Copolymerisate.**

(30) Priorität: **08.06.88 DE 3819476**
**17.12.88 DE 3842539**

(43) Veröffentlichungstag der Anmeldung:
**13.12.89 Patentblatt 89/50**

(45) Bekanntmachung des Hinweises auf die Patenterteilung:
**18.11.93 Patentblatt 93/46**

(84) Benannte Vertragsstaaten:
**CH DE FR GB LI**

(56) Entgegenhaltungen:
**DE-A- 3 407 361**
**US-A- 4 064 091**
**US-A- 4 147 851**

(73) Patentinhaber: **BAYER AG**
**D-51368 Leverkusen(DE)**

(72) Erfinder: **Süling, Carlhans, Dr.**
**Carl-Leverkus-Strasse 10**
**D-5068 Odenthal(DE)**
Erfinder: **Röttger, Jutta, Dr.**
**Andreas-Gryphius-Strasse 20**
**D-5000 Köln 80(DE)**
Erfinder: **Bachem, Henning, Dr.**
**Wolfskaul 10**
**D-5000 Köln 80(DE)**
Erfinder: **Probst, Joachim, Dr.**
**Humperdinckstrasse 42**
**D-5090 Leverkusen 1(DE)**
Erfinder: **Kortmann, Wilfried, Dr.**
**Hinterveserde 27**
**D-5992 Nachrodt-Wiblingwerde(DE)**

EP 0 345 552 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

## Beschreibung

Die Erfindung betrifft wäßrige Dispersionen von Copolymerisaten und Pfropfcopolymerisaten aus ethylenisch ungesättigten Perfluoralkylmonomeren und perfluoralkylgruppenfreien ethylenisch ungesättigten Monomeren, die in Gegenwart von kationischen Gruppen enthaltenden Emulgatoren hergestellt werden, ein Verfahren zu ihrer Herstellung und ihre Verwendung zur Hydrophobierung und Oleophobierung von Textilien, Leder und Papier.

Copolymerisatdispersionen auf Basis von Perfluoralkylgruppen enthaltenden Monomeren in Wasser sind bekannt. Sie liefern gute Oleophobausrüstungen auf vielen Substraten, wenn die Perfluoralkylreste linear sind und mehr als 6 C-Atome im Perfluoralkylrest enthalten.

Bei der Herstellung dieser Copolymerisatdispersionen durch Emulsionspolymerisation werden Emulgatoren oder Emulgatorsysteme verwendet. Je nach Emulgatorsystem erhält man anionisch oder kationisch stabilisierte Dispersionen, deren Lagerbeständigkeit durch Zusatz von nichtionischen Emulgatoren verbessert werden kann. Für die Textil- und Teppicholeophobierung sind, auch in Verbindung mit weiteren Ausrüstungsmitteln oder Textilhilfsmitteln, kationische Polyperfluoralkyl(meth)-acrylatcopolymerisatdispersionen besonders geeignet.

Die Wirksamkeit von Oleophobierungsmitteln auf Basis von Polyperfluoralkyl(meth)acrylatdispersionen ist wesentlich abhängig von der Konzentration an Perfluoralkylgruppen im Copolymer, von der Zusammensetzung des Copolymerisates und dessen Teilchengröße. Auch die Art der verwendeten Emulgatoren beeinflußt die anwendungstechnischen Eigenschaften. Anwendungstechnisch ist es häufig erforderlich, daß bei der Oleophobausrüstung zusätzlich auch eine Hydrophobierung bewirkt wird.

Die zur Herstellung der Dispersionen notwendigen Emulgatoren wirken, besonders wenn sie in hohen Konzentrationen verwendet werden, nachteilig auf die Einstellung der gewünschten Hydrophobie. Außerdem sind die Emulgatoren häufig mit die Ursache dafür, daß die ausgerüsteten Waren ein hohes Schmutzrückhaltevermögen haben. Zur Herstellung von sehr feinteiligen Dispersionen, die eben aufgrund dieser Feinteiligkeit besonders wirksam sind, müssen im allgemeinen Emulgatoren in nachteilig hohen Konzentrationen verwendet werden. Es stellt sich danach die Aufgabe, Emulgatorsysteme zu erarbeiten, die eine Herstellung von sehr feinteiligen Perfluoralkylpolymer-Dispersionen erlauben und ihre Wirksamkeit als Hydrophobierungsmittel und ihr Anschmutzverhalten nicht nachteilig beeinflussen, Unter feinteiligen Dispersionen werden Dispersionen mit mittleren Teilchengrößen unter 600 nm verstanden, Besonders gute Ergebnisse erhält man, wenn man Dispersionen mit mittleren Teilchengrößen von 200 bis 500 nm verwendet.

Es wurde nun gefunden, daß wäßrige Dispersionen von Copolymerisaten und Pfropfcopolymerisaten aus ethylenisch ungesättigten Perfluoralkylmonomeren und anderen bekannten ethylenisch ungesättigten Monomeren mit den gewünschten Eigenschaften erhalten werden, wenn die (Pfropf)Copolymerisation als Emulsionspolymerisation in Wasser in Gegenwart von 0,1 bis 7 Gew,-%, bezogen auf die zur Polymerisation eingesetzten Monomermengen, an polymeren, wasserlöslichen Emulgatoren der allgemeinen Formel (I)

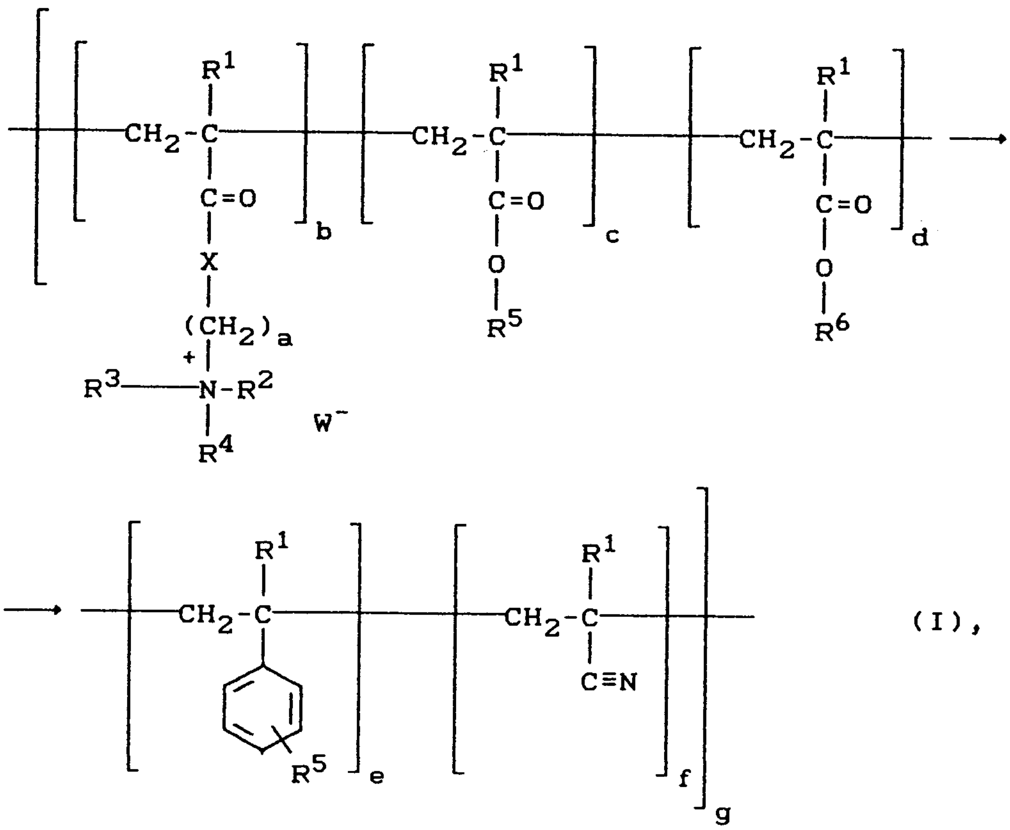

(I),

worin

| | |
|---|---|
| X | Sauerstoff oder NH, |
| $R^1$ | Wasserstoff oder Methyl, |
| $R^2$ | $C_1$-$C_4$-Alkyl, |
| $R^3$ | $C_1$-$C_4$-Alkyl, |
| $R^4$ | H, $C_1$-$C_{18}$-Alkyl, Aralkyl oder Cycloalkyl oder einen Rest der Formel |

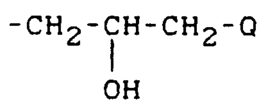

(Q = H, Cl, Br oder $C_1$-$C_{15}$-Alkyl)

| | |
|---|---|
| $R^5$ | Wasserstoff oder $C_1$-$C_8$-Alkyl, |
| $R^6$ | $C_{12}$-$C_{24}$-Alkyl, |
| $W^-$ | ein Anion, |
| a | 1 - 3, die Gewichtsbrüche |
| b | 0,1 - 0,8, |
| c | 0 - 0,5, |
| d | 0 - 0,5, |
| e | 0 - 0,7 und |
| f | 0 - 0,6 bedeuten, wobei b + c + d + e + f =1 ist, und |
| g | so zu wählen ist, daß Molekulargewichte $M_w$ von 5 000 bis 1 000 000 resultieren, |

unter Erzielung feinteiliger Dispersion en mit einer mittleren Teilchengröße unter 600 nm. durchgeführt wird.

In Formel (I) stehen bevorzugt

| | |
|---|---|
| $R^2$ und $R^3$ | unabhängig voneinander für Methyl oder Ethyl, |
| $R^4$ | für $C_1$-$C_6$-Alkyl, Benzyl, Phenylethyl oder Cyclohexyl oder einen Rest der Formel |

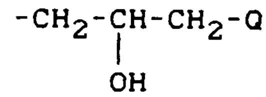

$R^5$ für Wasserstoff oder $C_1$-$C_8$-Alkyl,
$R^6$ für $C_{15}$-$C_{22}$-Alkyl und
$W^-$ für $Cl^-$, $Br^-$, 1/2 $SO_4^{2-}$, 1/3 $PO_4^{3-}$, $CH_3$-O-$SO_3^-$ oder $CH_3$-$COO^-$.

Die übrigen Symbole haben die vorstehend genannte Bedeutung.

Bei den kationischen Emulgatoren der allgemeinen Formel (I) handelt es sich um wasserlösliche Verbindungen. Sie sind durch radikalisch initiierte Copolymerisation von Styrol und seinen Derivaten, (Meth)Acrylnitril, (Meth)Acrylsäure und ihren Estern mit Dialkyl-Aminoalkyl(meth)acrylaten bzw. Dialkyl-Aminoalkyl(meth)acrylamiden in Lösung, Dispersion oder Masse und anschließende Quaternierung erhältlich, wobei der Quaternierungsgrad mindestens 10 % beträgt.

Eine bevorzugte Ausführungsform ist die Polymerisation der Monomerengemische in Lösung mit anschließender Quaternierung. Als Initiatoren können übliche peroxidische Starter oder aliphatische Azoverbindungen verwendet werden. Es ist vorteilhaft, bei der Lösungspolymerisation Lösungsmittel zu verwenden, die keine zu hohen Übertragungskonstanten besitzen, z.B. Butanol, Isopropanol, Aceton, Methylisobutylketon oder Essigsäurealkylester.

Als Aminoalkyl(meth)acrylate werden vorzugsweise tertiäre Aminogruppen enthaltende Derivate verwendet. Als Beispiele seien Diethylaminoethyl-(meth)acrylat, Dimethylaminopropyl-(meth)acrylat, Dimethylaminopropyl-(meth)acrylamid und Dimethylaminoethyl-(meth)acrylat genannt.

Bevorzugte Polymere (I) werden aus diesen basischen Monomeren und (Meth)Acrylsäurealkylestern mit 1-4 C-Atomen im Alkylrest und/oder (Meth)acrylsäurealkylestern mit 8 bis 22 C-Atomen im Alkylrest in etwa äquimolaren Mengen bzw. aus diesen basischen Monomeren, Styrol und Acrylnitril im Verhältnis von 1 bis 2, 2 bis 10 und 1 bis 1,5 erhalten. Die Quaternierung der basischen Polymeren kann mit bekannten Quaternierungsmitteln wie Alkylhalogeniden, Dialkylsulfaten und Monoepoxiden durchgeführt werden und erfolgt in an sich bekannter Weise (z.B. nach EP-A 0 160 872). Das Quaternierungsmittel wird dabei, bezogen auf Mol basischem Stickstoff im Vorprodukt, im Molverhältnis 0,25-2,5, vorzugsweise 0,5-2,0, eingesetzt. Die gegebenenfalls verbleibenden tertiären Aminogruppen werden protoniert.

Bevorzugte ethylenisch ungesättigte Perfluoralkylmonomere sind die der Formeln

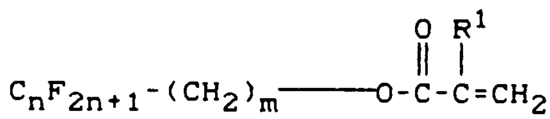 II

und

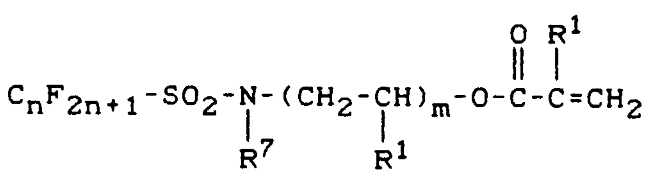 III

worin
$R^1$ Wasserstoff oder Methyl,
$R^7$ $C_1$-$C_4$-Alkyl,
m 1 oder 2 und
n 6-12 bedeuten.

Die Auswahl der ethylenisch ungesättigten Monomeren, die zusätzlich zu den Perfluoralkylmonomeren zur Herstellung der erfindungsgemäßen Polymerisat-Dispersionen verwendet werden, richtet sich nach jeweiligen anwendungstechnischen Anforderungen. Beispiele für diese Comonomeren sind Styrol, Acryl- und Methacrylsäureester, Vinylester wie Vinylacetat, Maleinsäurederivate und Acryl- oder Methacrylamide.

Gute anwendungstechnische Eigenschaften werden erreicht, wenn Perfluoralkylmonomere der Formeln (II) und/oder (III) unter Verwendung der erfindungsgemäßen Emulgatoren (I) mit Monomergemischen copolymerisiert werden, die mindestens eine Mischungskomponente der Formel

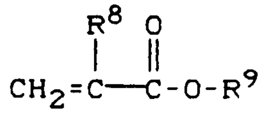 IV

worin

$R^8$ für Wasserstoff, Methyl oder Fluor und

$R^9$ für einen $C_8$-$C_{22}$-Alkylrest stehen,

enthalten.

Beispiele für Comonomere der allgemeinen Formel (IV) sind Acrylsäure- oder Methacrylsäureester von Behenylalkohol, Stearylalkohol, Oleylalkohol, Nonylalkohol oder Octylalkohol oder Isomerengemischen von solchen Alkoholen.

Die Ester (IV) können in Mischung mit den vorstehend genannten fluorfreien Monomeren, beispielsweise auch mit Estern von Acryl- und Methacrylsäure und $C_1$-$C_7$-Alkanolen, copolymerisiert werden.

Im allgemeinen werden wasserunlösliche Comonomere bevorzugt, wenn auch z.B. zur Gewährleistung einer gewissen Haftung auf den verschiedenen Substraten bei der Oleophob/Hydrophobaurüstung in Anteilen bis zu 10 %, vorzugsweise 2 %, wasserlösliche Comonomere verwendet werden können.

Zur Herstellung der erfindungsgemäßen Polymerisatdispersionen wird nach der Verfahrensweise der Emulsionspolymerisation in Wasser gearbeitet. Die Perfluoralkylmonomeren werden gegebenenfalls unter Verwendung von Hilfslösungsmitteln zusammen mit den weiteren Comonomeren homogen gelöst. Als Hilfslösungsmittel sind Lösungsmittel geeignet, die den Ablauf der Emulsionspolymerisation wenig beeinflussen, z.B. Alkohole wie Methanol, Ethanol, n-Propanol, Isopropanol und tert.-Butanol, Ketone wie Aceton und Methylethylketon, Ether wie Tetrahydrofuran und Amide wie Dimethylacetamid. Häufig ist es vorteilhaft, als Hilfslösungsmittel mit Wasser nicht oder nur begrenzt mischbare Lösungsmittel zu verwenden wie Ester niederer Alkohole mit niederen Carbonsäuren unter der Voraussetzung, daß unter den Bedingungen der Emulsionspolymerisation keine Esterverseifung erfolgen kann. Besonders vorteilhaft ist die Verwendung von Essigsäureethylester, Essigsäuremethylester, Propionsäuremethylester oder Methylethylketon. Das Hilflösungsmittel wird nach Abschluß der Polymerisation entfernt.

Die Herstellung der Emulsionen erfolgt in Rühraggregaten, Ultraschallapparaturen oder Homogenisatoren.

Die Polymerisation wird durch Radikalbildner ausgelöst. Als Radikalbildner sind z.B. aliphatische Azoverbindungen wie Azodiisobutyronitril und organische oder anorganische Peroxide geeignet. Als organische Peroxide seien genannt Diacylperoxide wie Dibenzoylperoxid, Hydroperoxide wie tert.-Butylhydroperoxid, tert.-Butylperpivalat und Percarbonate wie Dicyclohexylpercarbonat. Als anorganische Peroxide eignen sich besonders die Alkalisalze der Peroxidischwefelsäure.

Im allgemeinen liegen die Polymerisationstemperaturen bei bis zu 100 °C, vorzugsweise bei 50-100 °C, insbesondere bei 60-90 °C.

Es ist auch möglich, durch Verwendung von Redoxsystemen die Copolymerisation bei Temperaturen von 40 °C und darunter durchzuführen. Geeignete Startersysteme sind z.B. Mischungen aus Peroxidisulfaten und reduzierenden Schwefelverbindugnen wie Bisulfite oder Thiosulfate oder Kombinationen von Diacylperoxiden mit tert. Aminen. Zur Einstellung der Molekulargewichte bzw. der Molekulargewichtsverteilungen können die bekannten Kettenüberträger auf Basis von Mercaptoverbindungen oder aliphatischen Aldehyden verwendet werden.

Bei der Polymerisation kann gleichzeitig eine Pfropfpolymerisation stattfinden, bei der Anteile des Copolymeren auf den kationischen Emulgator (I) aufgepfropft werden.

Dadurch wird die Stabilität der erfindungsgemäßen Copolymerisatdispersionen zusätzlich erhöht. Solche Pfropfreaktionen werden beispielsweise von H. Gerrens in "Fortschritte der Hochpolymer-Forschung" Bd. I (1959) S. 300 beschrieben.

Besondere Ausführungsformen der erfindungsgemäßen Copolymerisatdispersionen sind Pfropfcopolymerisatdispersionen, die unter Verwendung bekannter Pfropfgrundlagen hergestellt werden. Die Pfropfcopolymerisation unter Verwendung von Perfluoralkyl(meth)acrylaten in wäßriger Emulsion ist bekannt. Sie ist z.B. in den deutschen Offenlegungsschriften 3 407 361 und 3 407 362 beschrieben. Als Pfropfgrundlagen eignen sich besonders hydrophobe Polymere in Form von wäßrigen Dispersionen. Man erhält besonders gute Anwendungsergebnisse, wenn die Pfropfgrundlagen selbst die Eigenschaften von Hydrophobierungsmitteln haben.

Zur Erzielung einer gewünschten Teilchengrößenverteilung und zur Verbesserung der anwendungstechnischen Eigenschaften kann es vorteilhaft sein, bei der Herstellung zusätzlich zu den kationischen Emulgatoren (I) weitere kationische und/oder nichtionische Emulgatoren zu verwenden. Beispiele für derartige kationische Emulgatoren sind quartäre Ammonium- oder Pyridiniumsalze, z.B. Stearyldimethylbenzylammoniumchlorid oder N,N,N-Trimethyl-N-perfluoroctansulfonamidopropyl-ammoniumchlorid.

Durch nichtionische Emulgatoren wird besonders die Stabilität der Copolymerisatdispersionen erhöht.

Beispiele für nichtionische Emulgatoren sind Polyglykolether, z.B. Ethylenoxid/Propylenoxid-Block- oder -Copolymere sowie Alkoxylierungsprodukte, insbesondere Ethoxylierungsprodukte von Fettalkoholen, Alkylphenolen, Fettsäuren, Fettsäureamiden, Sorbitmonooleat.

Bei der Herstellung der Polymerisatdispersionen werden, bezogen auf die zur Polymerisation eingesetzten Monomeremengen, 0,1 bis 7 Gew.-%, vorzugsweise 0,2-4 Gew.-%, der erfindungsgemäßen, kationischen Emulgatoren verwendet. Von den üblichen kationischen Emulgatoren können 1-5 Gew.-%, vorzugsweise 1,2-3 Gew.-% verwendet werden. Die bekannten nichtionischen Emulgatoren werden vorteilhaft in Mengen von 1-5 Gew.-%, vorzugsweise 1,5-4,5 Gew.-%, eingesetzt. Bei der Herstellung von Copolymerisatdispersionen mit besonders vorteilhaften anwendungstechnischen Eigenschaften ist es erforderlich, Emulgatorsysteme zu verwenden, die die beschriebenen unterschiedlichen Emulgatortypen in etwa gleichen Mengen enthalten. Die Gesamtmenge aller Emulgatoren sollte 10 Gew.-% nicht überschreiten.

Überraschend zeigte sich, daß mit den erfindungsgemäßen Dispersionen natürliche und synthetische Materialien wie Fasern, Filamente, Garne, Vliese, Gewebe, Gewirke und Gestricke, insbesondere Teppiche, aus insbesondere Cellulose und ihren Derivaten aber auch aus Polyester-, Polyamid- und Polyacrylnitrilmaterialien, Wolle oder Seide erfolgreich oleophob und hydrophob ausgerüstet werden können.

Die Ausrüstung erfolgt nach bekannten Verfahren, vorzugsweise nach dem Auszieh- oder Foulard-Verfahren beispielsweise zwischen Raumtemperatur und 40 °C, aber auch durch Pflatschen oder Besprühen mit einer nachgeschalteten Temperaturbehandlung bei 80-180, vorzugsweise 120 bis 150 °C.

Herstellung von Emulgatoren (I)

Beispiel 1

In 800 Gew.-Tln. tert.-Butanol werden in einem Reaktor 100 Gew.-Tl. Dimethylaminoethylmethacrylat und 100 Gew.-Tl. Stearylmethacrylat gelöst. Nach Verdrängen des Luftsauerstoffes gibt man 4 Gew.-Tl. Azodiisobutyronitril (AIBN) zu. Man heizt den Reaktor auf 70 °C und hält unter Rühren 7h bei dieser Temperatur. Nach dem Abkühlen wird durch eine Feststoffbestimmung ein Monomerumsatz von > 96 % gefunden.

Beispiel 2a

Zu einer Lösung von 150 g eines Vorproduktes gemäß Beispiel 1 sowie 4,5 g Essigsäure und 40 g tert.-Butanol gibt man bei 40 °C in 30 Minuten 9,9 g Propylenoxid. Anschließend verdünnt man mit 30 g tert.-Butanol und rührt 3 Stunden bei 40-45 °C nach. Danach setzt man zur Beendigung der Alkylierung 55 g Essigsäure zu, entgast das fertige Produkt und stellt mittels tert.-Butanol den gewünschten Feststoffgehalt ein.
Feststoffgehalt: 15,0 Gew.-%
pH-Wert: 4,5

Beispiel 2b

Es wird nach Beispiel 2a vorgegangen, aber anstelle von 9,9 g Propylenoxid nur 6,6 g eingesetzt.
Feststoffgehalt: 15,0 Gew.-%
pH-Wert: 4,8

Beispiel 2c

Zu einer Lösung von 706,8 g (0,5 Mol) des basischen Vorproduktes gemäß Beispiel 1 in 150 g tert.-Butanol fügt man bei 25-30 °C unter Rühren 83,3 g (0,9 Mol) Epichlorhydrin und erwärmt in einer Stunde langsam auf 65 °C Innentemperatur.

Man rührt solange bei 65 °C weiter, bis die Viskosität steigt und verdünnt das Reaktionsgemisch dann portionsweise mit 200 g tert.-Butanol. Sobald die gewünschte Viskosität erreicht ist, säuert man mit Essigsäure an, kühlt auf 50 °C ab und entgast das fertige Produkt. Durch Verdünnen mit tert.-Butanol wird der Feststoffgehalt im Anschluß eingestellt.

Feststoffgehalt: 10,0 Gew.-%
Viskosität: 62 mPas/25 °C
pH-Wert: 3,6

Beispiel 3

In einem 40 l-Autoklaven werden 5270 g Isopropanol vorgelegt. Der Autoklav wird gründlich mit Stickstoff gespült und danach auf 80 °C erwärmt. Bei dieser Temperatur werden die Mischungen I und die Lösungen II der Tabelle 1 innerhalb von 4 Stunden unter Luftausschluß zudosiert. Dann wird 1 bis 2 Stunden nachgerührt und danach mit Lösung III nachaktiviert. Daraufhin wird ca. 6 bis 12 Stunden bei 80 °C gerührt. Nach der Terpolymerisation wird bei unveränderter Temperatur die in Tabelle 1 angegebene Menge an Essigsäure (IV) zu dem Polymerisat zudosiert.

Anschließend wird das Monoepoxid (V) als Quaternierungsmittel in ca. 15 min. zudosiert und ca. 1 Stunde gerührt. Daraufhin wird mit der restlichen Menge an Essigsäure (VI) versetzt. In einem 120 l-Vorratsgefäß, das mit einem Rührer versehen ist, werden ca. 63 - 65 l entionisiertes Wasser von einer Temperatur von ca. 60 °C vorgelegt und der Inhalt des 40 l-Autoklaven hiermit vereinigt.

Die Herstellung einer homogenen wäßrigen Lösung erfolgt bei intensivem Rühren in kurzer Zeit. Die wäßrigen Lösungen, die noch organisches Lösungsmittel enthalten, besitzen die ebenfalls in Tabelle 1 verzeichneten Eigenschaften.

Tabelle 1

| Emulgator | | A | B | C | D | E |
|---|---|---|---|---|---|---|
| Polymerisations-und Quaternierungstemperatur (°C) | | 80 | 80 | 80 | 80 | 80 |
| I. | N,N-Dimethylaminoethylmethacrylat (g) | 3217 | 3217 | 2257 | 3217 | 3217 |
| | Styrol (g) | 10244 | 10244 | 10608 | 10244 | 10244 |
| | Acrylnitril (g) | 2644 | 2644 | 3219 | 2644 | 2644 |
| II. | Azoisobutyronitril (g) | 500 | 500 | 550 | 500 | 500 |
| | Aceton (g) | 3000 | 3000 | 3000 | 3000 | 3000 |
| III. | Azoisobutyronitril (g) | 50 | 50 | 50 | 50 | 50 |
| | Aceton (g) | 300 | 300 | 300 | 300 | 300 |
| IV. | Essigsäure (g) | 1229 | 984 | 690 | 984 | 984 |
| V. | 1,2-Epoxydodecan (g) | 1131 | - | - | - | - |
| | 1,2-Epoxyhexan (g) | - | 1025 | 719 | - | - |
| | 1,2-Epoxybutan (g) | - | - | - | 885 | - |
| | Propylenoxid (g) | - | - | - | - | 891 |
| VI. | Essigsaure (g) | 1230 | 1475 | 1035 | 1475 | 1475 |
| | Konzentration (%) | 20,3 | 20,1 | 20,2 | 20,0 | 19,9 |
| | Viskosität (bei 20 °C) (mPa.s)* | 50-100 | 30-70 | 300-500 | 20-50 | 20-50 |
| | pH-Wert: | 4,2 | 4,2 | 4,1 | 4,2 | 4,2 |
| | Aussehen der Emulgator-Lösung; | leicht trüb | klar | klar | klar | klar |

*) Viskosität ist nicht konstant, da Proben strukturviskos

Herstellung eines als Pfropfgrundlage verwendbaren Polykondensats

Beispiel 4

1,5 Mol Behensäure werden aufgeschmolzen und innerhalb von 30 Min. gleichzeitig mit 1 Mol Melaminhexamethylolpentamethylether und 0,9 Mol N-Methyldiethanolamin versetzt; dabei wird die Schmelze auf 130 °C gebracht und 3 Stunden bei dieser Temperatur gehalten.

Anschließend wird in die Schmelze die gleiche Gewichtsmenge eines Paraffins vom Schmelzpunkt 52 °C eingetragen.

Herstellung einer erfindungsgemäßen Copolymerisatdispersion

Beispiel 5

Man bereitet folgende Lösungen bei 40 °C:

| | | |
|---|---|---|
| Lösung 1: | 600 Gewichtsteile<br>2,75 Gewichtsteile<br>18,45 Gewichtsteile | entionisiertes Wasser<br>Benzyldodecyldimethylammoniumchlorid<br>der nach Beispiel 2a erhaltenen Emulgatorlösung |
| Lösung 2: | 247 Gewichtsteile<br>30,8 Gewichtsteile<br>42,6 Gewichtsteile<br>30,8 Gewichtsteile<br>1,125 Gewichtsteile | Essigsäureethylester<br>N-Methyl-N-perfluoroctansulfonamidoethylmethacrylat<br>Butylacrylat<br>Stearylmethacrylat<br>Dilauroylperoxid (Zugabe kurz vor dem Emulgieren) |
| Lösung 3: | 1,125 Gewichtsteile<br>1,5 Gewichtsteile | t-Butylperpivalat<br>Essigsäureethylester |

Aus den Lösungen 1 und 2 wird eine Mischung hergestellt, die bis zur Teilchengrößenkonstanz bei 40 °C in einer Emulgiermaschine emulgiert wird. Die erhaltene Emulsion gibt man in einen Reaktor, der mit Rührer, Rückflußkühler und Innenthermometer ausgestattet ist. Man setzt Lösung 3 bei 40 °C zu und rührt 15 Min. Anschließend steigert man die Temperatur auf 70 °C und behält diesen Wert für 2h bei. Danach erhöht man die Temperatur nochmals und hält sie für 2h im Bereich von 70-80 °C, so daß der Essigsäureethylester über eine zusätzlich angebrachte Destillationsbrücke abdestillieren kann. Schließlich rührt man noch 1h bei 80 °C nach.
Feststoffgehalt: 14,9 %
Fluorgehalt im Feststoff: 14,1 %
Mittlere Teilchengröße: 337 nm
(nach Lichtstreuung)

Beispiel 6

Es wird wie bei Beispiel 5 vorgegangen, aber in Lösung 1 die nach Beispiel 2a erhaltene Emulgatorlösung durch 14 Gewichtsteile einer nach Beispiel 3E (siehe Tabelle 1) erhaltene Emulgatorlösung ersetzt.
Feststoffgehalt: 15,4 %
Fluorgehalt im Feststoff: 14,6 %
Mittlere Teilchengröße: 476 nm
(nach Lichtstreuung)

Herstellung einer Copolymerisatdispersion unter Weglassen eines Emulgators (I)

Beispiel 7 (zum Vergleich)

Es wird eine Copolymerisatdispersion nach den Angaben aus Beispiel 5 hergestellt, aber unter Weglassen der Lösung aus Beispiel 2a,
Feststoffgehalt: 13,7 %
Fluorgehalt im Feststoff: 15,4 %
Mittlere Teilchengröße : 327 nm
(nach Lichtstreuung)

Herstellung einer erfindungsgemäßen Copolymerisatdispersion

Beispiel 8

Man bereitet folgende Lösungen bei 50 ° C:

| | | |
|---|---|---|
| Lösung 1: | 760 Gewichtsteile<br>4,5 Gewichtsteile<br>9,2 Gewichtsteile | entionisiertes Wasser<br>eines ethoxylierten Nonylphenols mit 10 EO<br>der nach Beispiel 2b erhaltenen Emulgatorlösung |
| Lösung 2: | 300 Gewichtsteile<br>55,6 Gewichtsteile<br>29,5 Gewichtsteile<br>23,8 Gewichtsteile<br>22,8 Gewichtsteile | Essigsäureethylester<br>N-Methyl-N-perfluoroctansulfonamidoethylmethacrylat<br>Stearylmethacrylat<br>Vinylacetat<br>Pfropfgrundlage wie nach Beispiel 4 erhalten |

Man bereitet bei 30 ° C.

| | |
|---|---|
| Lösung 3: | 1,018 Gewichtsteile t-Butylperpivalat<br>1,429 Gewichtsteile Dilauroylperoxid<br>8,1 Gewichtsteile Essigsäureethylester |

Aus den Lösungen 1 und 2 wird eine Mischung hergestellt, die bei 50 ° C in einer Emulgiermaschine emulgiert wird. Die erhaltene Emulsion gibt man in einen Reaktor, der mit Rührer, Rückflußkühler und Innenthermometer ausgestattet ist und läßt auf 30 ° C abkühlen. Man setzt Lösung 3 bis 30 ° C unter Rühren zu. Man steigert die Temperatur in 1h von 30 auf 50 ° C und in einer weiteren Stunde von 50 auf 70 ° C. Danach läßt man das Reaktionsgemisch unter Rühren 2h bei 70 ° C.

Anschließend hält man für 3h bei 70-80 ° C, so daß der Essigsäureethylester über eine zusätzlich angebrachte Destillationsbrücke abdestillieren kann.
Feststoffgehalt: 13,6 %
Fluorgehalt im Feststoff: 23,5 %
Mittlere Teilchengröße: 328 nm
(nach Lichtstreuung)

Herstellung einer Copolymerisatdispersion unter Weglassen eines Emulgators (I)

Beispiel 9 (zum Vergleich)

Man bereitet folgende Losungen bei 50 ° C:

| | | |
|---|---|---|
| Lösung 1: | 760 Gewichtsteile<br>4,54 Gewichtsteile<br>1,8 Gewichtsteile | entionisiertes Wasser<br>eines ethoxylierten Nonylphenols 10 EO<br>Benzyldodecyldimethylammoniumchlorid |
| Lösung 2: | 300 Gewichtsteile<br>55,6 Gewichtsteile<br>29,5 Gewichtsteile<br>23,8 Gewichtsteile<br>22,8 Gewichtsteile | Essigsäureethylester<br>N-Methyl-N-perfluoroctansulfonamidoethylmethacrylat<br>Stearylmethacrylat<br>Vinylacetat<br>Pfropfgrundlage wie nach Beispiel 4 erhalten |

Man bereitet folgende Lösung bei 30 ° C:

| | | |
|---|---|---|
| Lösung 3: | 1,018 Gewichtsteile<br>1,429 Gewichtsteile<br>8,1 Gewichtsteile | t-Butylperpivalat<br>Dilauroylperoxid<br>Essigsäureethylester |

Aus den Lösungen 1 und 2 wird eine Mischung hergestellt und diese bei 50 °C in einer Emulgiermaschine emulgiert, Die erhaltene Emulsion gibt man in einen Reaktor, der mit Rührer, Rückflußkühler und Innenthermometer ausgestattet ist und läßt auf 30 °C abkühlen, Man setzt Lösung 3 bis 30 °C unter Rühren zu und steigert die Temperatur innerhalb 1h von 30 auf 50 °C, sowie in einer weiteren Stunde von 50 auf 70 °C, Danach läßt man das Reaktionsgemisch 2h bei 70 °C, Anschließend hält man die Temperatur für 3h bei 70-80 °C und destilliert dabei den Essigsäureethylester über eine zusätzlich angebrachte Destillationsbrücke ab,

Feststoffgehalt: 13,1 %

Fluorgehalt im Feststoff: 26,7 %

Mittlere Teilchengröße: 270 nm

(nach Lichtstreuung)

Tabelle 2 und 3 zeigen die anwendungstechnischen Ergebnisse, die erhalten werden, wenn man die nach Beispiel 5 bis 9 hergestellten Copolymerisatdispersionen bei der Oleophob-/Hydrophobausrüstung von Teppichen auf Basis von synthetischen Polyamidfasern einsetzt.

Tabelle 2

| | Oleohobie[1)] | Hydrophobie[2)] |
|---|---|---|
| Beispiel 5 | 4-5 | 50/50 |
| Beispiel 6 | 6 | 30/70 |
| Beispiel 7 * | 3 | 60/40/-70/30 |

* Vergleich

[1)] Nach AATCC-Test-Methode 118

[2)] Beständigkeit gegen wäßrig-isopropanolische Lösungen nach Standard-Methode.

Gegenüber den ohne Verwendung eines Emulgators (I) hergestellten Copolymerisatdispersionen ergibt sich eine deutliche Verbesserung sowohl der oleophobierenden als auch der hydrophobierenden Wirkung beim Einsatz eines solchen Emulgators. Das Anschmutzverhalten der mit den erfindungsgemäßen Copolymerisatdispersionen ausgerüsteten Teppiche ist verbessert und entspricht erhöhten Anforderungen.

Tabelle 3

| | Oleohobie[1)] | Hydrophobie[2)] |
|---|---|---|
| Beispiel 8 | 4-5 | 60/40-70/30 |
| Beispiel 9* | 3 | 80/20 |
| Die erfindungsgemäße Polymerisation ist auch bei diesem Vergleich überlegen. | | |

* Vergleich

[1)] Nach AATCC-Test-Methode 118

[2)] Beständigkeit gegen wäßrig-isopropanolische Lösungen nach Standard-Methode.

Herstellung einer erfindungsgemäßen Copolymerisatdispersion

Beispiel 10

1. Stufe: Herstellung des Vorlatex

Man bereitet folgende Lösungen bei 50 ° C:

| | | |
|---|---|---|
| Lösung 1: | 800 Gewichtsteile | entionisiertes Wasser |
| | 5 Gewichtsteile | ethoxylierten Nonylphenols mit durchschnittlich 10 Ethylenoxideinheiten |
| | 6,9 Gewichtsteile | Benzyldodecyldimethylammoniumchlorid |
| | 17,3 Gewichtsteile | der nach Beispiel 2c erhaltenen Emulgatorlösung |
| Lösung 2: | 402 Gewichtsteile | Essigsäureethylester |
| | 43,5 Gewichtsteile | Adipinsäuredioctylester |
| | 54,2 Gewichtsteile | N-Methyl-N-perfluoroctansulfonamidoethylmethacrylat |
| | 24,9 Gewichtsteile | Stearylmethacrylat |
| | 1,44 Gewichtsteile | Isobutylmethacrylat |

Man bereitet folgende Lösung bei Raumtemperatur:

| | | |
|---|---|---|
| Lösung 3: | 0,9 Gewichtsteile | t-Butylperpivalat |
| | 2,1 Gewichtsteile | Essigsäureethylester |
| | 0,9 Gewichtsteile | Didecanoylperoxid |

Aus den Lösungen 1 und 2 wird eine Mischung hergestellt und diese fünfmal bei 50 ° C in einer Emulgiermaschine emulgiert. Die erhaltene Emulsion wird in einen Reaktor gegeben, der mit Rührer, Rückflußkühler und Innenthermometer versehen ist. Man gibt unter Rühren bei 50 ° C Lösung 3 zu. Es wird noch eine halbe Stunde bei 50 ° C gerührt, dann die Temperatur innerhalb 1h von 50 auf 70 ° C erhöht und danach 2h bei 70 ° C gehalten. Anschließend läßt man das Reaktonsgemisch 3h am Rückfluß (bei ca. 70 ° C) reagieren. Man erhält einen Vorlatex mit 10,4 % Feststoffgehalt.

2. Stufe: Herstellung der erfindungsgemäßen Copolymerisatdispersion unter Verwendung des Vorlatex aus Stufe 1

Man bereitet folgende Lösungen bei 50 ° C:

| | | |
|---|---|---|
| Lösung 1: | 1365 Gewichtsteile | Vorlatex aus Stufe 1 |
| | 34,3 Gewichtsteile | Essigsäureethylester |
| | 45,3 Gewichtsteile | Isobutylmethacrylat |
| | 2,8 Gewichtsteile | N-Methyl-N-perfluoroctansulfonamidoethylmethacrylat |
| Lösung 2: | 0,943 Gewichtsteile | t-Butylperpivalat |
| | 1,75 Gewichtsteile | Essigsäureethylester |
| | 0,48 Gewichtsteile | Didecanoylperoxid |

Lösung 1 wird bei 50 ° C in einer Emulgiermaschine emulgiert und anschließend in einen Reaktor mit Rührer, Rückflußkühler und Innenthermometer gegeben. Lösung 2 wird unter Rühren bei 50 ° C zugegeben und alles noch eine halbe Stunde bei 50 ° C gerührt. Anschließend wird innerhalb 1h von 50 auf 70 ° C geheizt und noch 2h bei 70 ° C gehalten. Danach wird noch 2h bei 70-80 ° C gefahren und dabei der Essigsäureethylester über eine zusätzlich angebrachte Destillationsvorrichtung abdestilliert. Schließlich wird noch 1h bei 80 ° C nachgerührt.
Feststoffgehalt: 21,2 %
Fluorgehalt im Feststoff: 13,6 %

Beispiel 11

Es wird wie bei Beispiel 10 vorgegangen, aber zur Herstellung des Vorlatex (1. Stufe) in Lösung 1 die nach Beispiel 2c erhaltene Emulgatorlösung durch 17,3 Gewichtsteile einer nach Beispiel 3E (siehe Tabelle) erhaltenen Emulgatorlösung ersetzt.
Feststoffgehalt: 23,2 %
Fluorgehalt im Feststoff: 14,4 %

Ohne Zusatz eines Emulgators (I) vor der Emulsionspolymerisation werden instabile Polymerisatdispersionen erhalten. Bei einer anwendungstechnischen Prüfung wie in den Beispielen 5 bis 9 ergab sich für die Oleophobie eine Note von 3-4 für Beispiel 10 und die Note 6 für Beispiel 11 sowie für Beispiel 10 die Werte 60/40 bis 70/30 bzw. für Beispiel 11 der Wert 70/30 für die Hydrophobie.

**Patentansprüche**

**1.** Wäßrige Dispersionen von Copolymerisaten und Pfropfcopolymerisaten aus ethylenisch ungesättigten Perfluoralkylmonomeren und perfluoralkylgruppenfreien ethylenisch ungesättigten Monomeren, dadurch gekennzeichnet, daß sie durch (Pfropf )Copolymerisation, durchgeführt als Emulsionspolymerisation in Wasser, in Gegenwart von 0,1 bis 7 Gew.-%, bezogen auf die zur Polymerisation eingesetzten Monomermengen, an polymeren, wasserlöslichen Emulgatoren der allgemeinen Formel

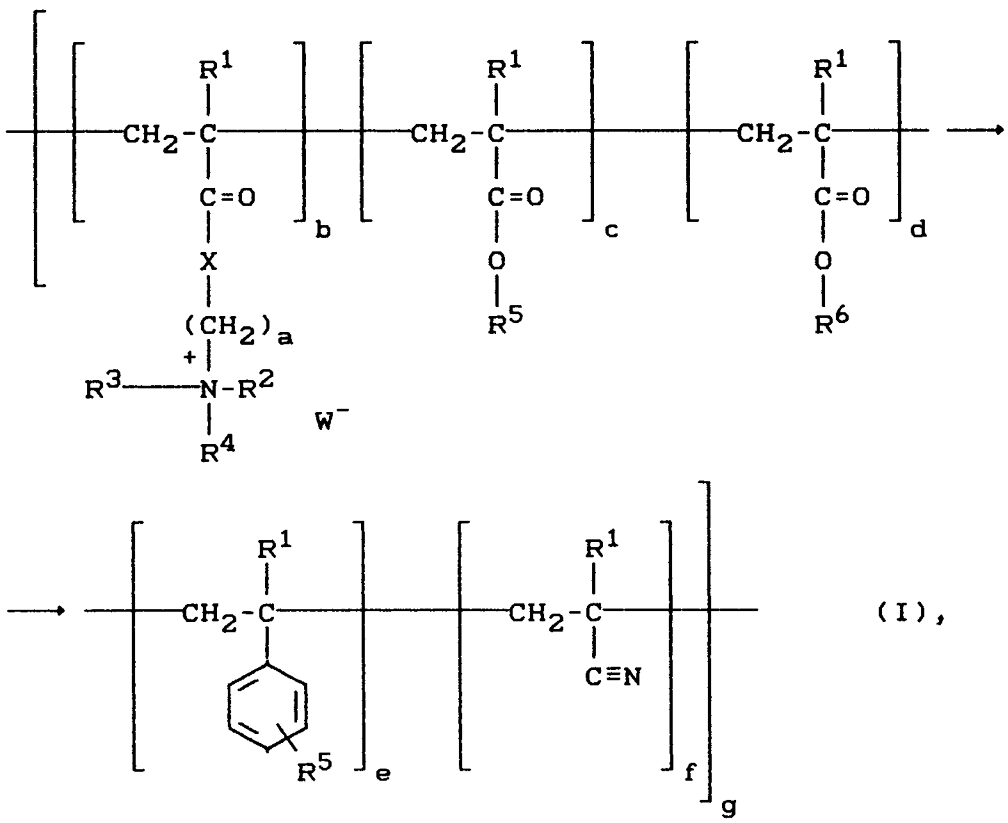

(I),

worin

| | |
|---|---|
| X | Sauerstoff oder NH, |
| $R^1$ | Wasserstoff oder Methyl, |
| $R^2$ | $C_1$-$C_4$-Alkyl, |
| $R^3$ | $C_1$-$C_4$-Alkyl, |
| $R^4$ | H, $C_1$-$C_{18}$-Alkyl, Aralkyl oder Cycloalkyl oder einen Rest der Formel |

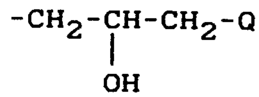

(Q = H, Cl, Br oder $C_1$-$C_{15}$-Alkyl)

$R^5$ Wasserstoff oder $C_1$-$C_8$-Alkyl,
$R^6$ $C_{12}$-$C_{24}$-Alkyl,
$W^-$ ein Anion,
a 1 - 3, die Gewichtsbrüche
b 0,1 - 0,8,
c 0 - 0,5,
d 0 - 0,5,
e 0 - 0,7 und
f 0 - 0,6 bedeuten, wobei b + c + d + e + f = 1 ist, und
g so zu wählen ist, daß Molekulargewichte $M_w$ von 5 000 bis 1 000 000 resultieren,

als feinteilige Dispersionen mit einer mittleren Teilchengröße unter 600 nm erhältlich sind.

**2.** Wäßrige Dispersionen nach Anspruch 1, dadurch gekennzeichnet, daµ sie in Gegenwart von Emulgatoren der Formel (I) erhältlich sind, worin

$R^2$ und $R^3$ unabhängig voneinander für Methyl oder Ethyl,
$R^4$ für $C_1$-$C_6$-Alkyl, Benzyl, Phenylethyl oder Cyclohexyl oder einen Rest der Formel

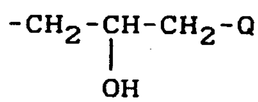

$R^5$ für Wasserstoff oder $C_1$-$C_8$-Alkyl,
$R^6$ für $C_{15}$-$C_{22}$-Alkyl und
$W^-$ für $Cl,^-$, $Br^-$, 1/2 $SO_4^{2-}$, 1/3 $PO_4^{3-}$, $CH_3$-O-$SO_3^-$ oder $CH_3$-$COO^-$,

stehen, und die übrigen Symbole die in Anspruch 1 angegebene Bedeutung haben.

**3.** Wäbrige Dispersionen nach Anspruch 1, dadurch gekennzeichnet, daß als Perfluoralkylmonomere Verbindungen der Formeln

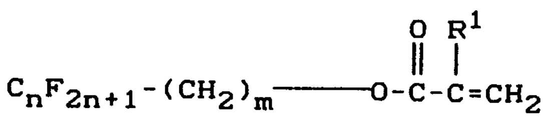
II

und

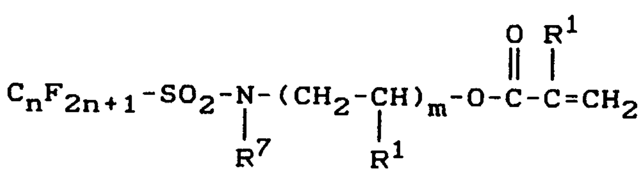
III

worin

$R^1$ Wasserstoff oder Methyl,
$R^7$ $C_1$-$C_4$-Alkyl,
m 1 oder 2 und
n 6-12 bedeuten,

copolymerisiert werden.

**4.** Wäßrige Dispersionen nach Anspruch 1, dadurch gekennzeichnet, daß die Perfluoralkylmonomeren mit Monomergemischen, die mindestens eine Mischungskomponente der Formel

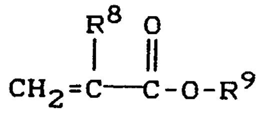

IV

enthalten, worin

$R^8$ für Wasserstoff, Methyl oder Fluor und

$R^9$ für $C_8$-$C_{22}$-Alkylrest stehen,

copolymerisiert werden.

**5.** Wäßrige Dispersionen nach Anspruch 1, dadurch gekennzeichnet, daß die (Pfropf)Copolymerisation bei 50-100 °C durchgeführt wird.

**6.** Wäßrige Dispersionen nach Anspruch 1, dadurch gekennzeichnet, daß die (Pfropf)Copolymerisation in Gegenwart von nicht ionischen und/oder kationischen Emulgatoren durchgeführt wird.

**7.** Verfahren zur Herstellung von wäßrigen Dispersionen von (Pfropf)Copolymerisaten aus ethylenisch ungesättigten Perfluoralkylmonomeren und perfluoralkylgruppenfreien ethylenisch ungesättigten Monomeren gemäß Anspruch 1, dadurch gekennzeichnet, daß die (Pfropf)Copolymerisation in Gegenwart von wasserlöslichen polymeren Emulgatoren der Formel (I) in einer Menge von 0,1 bis 7 Gew`-%, bezogen auf die zur Polymerisation eingesetzten Monomermengen, und in Form einer Emulsionspolymerisation in Wasser unter Erzeilung feinteiliger Dispersionen mit einer mittleren Teilchengröße unter 600 nm durchgeführt wird.

**8.** Verfahren zur Ausrüstung von Textilmaterialien, dadurch gekennzeichnet, daß man wäßrige Dispersionen des Anspruchs 1 verwendet.

**9.** Verfahren zur Hydrophob- und Oleophobausrüstung von Teppichen aus synthetischen Polyamiden, dadurch gekennzeichnet, daß man wäßrige Dispersionen des Anspruchs 1 verwendet.

## Claims

**1.** Aqueous dispersions of backbone and graft copolymers formed from ethylenically unsaturated perfluoroalkyl monomers and ethylenically unsaturated monomers free from perfluoroalkyl groups, characterized in that they are obtainable in a finely disperse state with an average particle size of below 600 nm by (graft) copolymerization, carried out as an emulsion polymerization in water, in the presence of 0.1 to 7 % by weight, relative to the amounts of monomer employed for the polymerization, polymeric water-soluble emulsifiers of the general formula

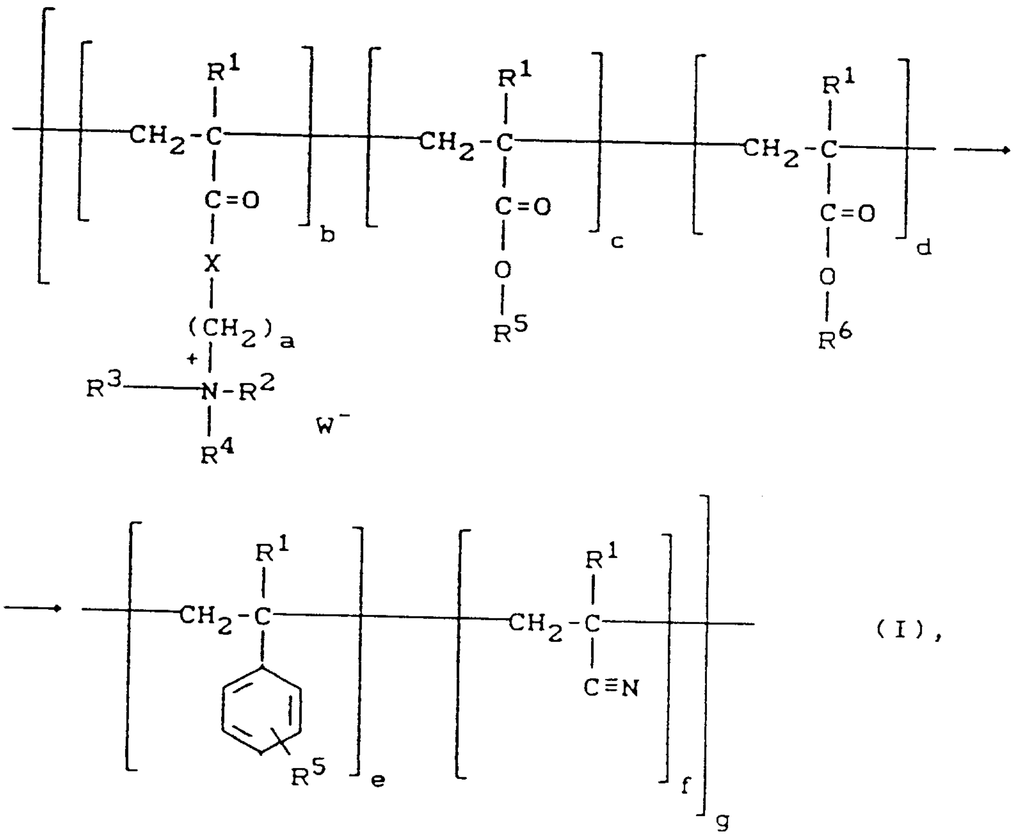

(I),

wherein

| | |
|---|---|
| X | denotes oxygen or NH, |
| $R^1$ | denotes hydrogen or methyl, |
| $R^2$ | denotes $C_1$-$C_4$-alkyl, |
| $R^3$ | denotes $C_1$-$C_4$-alkyl, |
| $R^4$ | denotes H, $C_1$-$C_{18}$-alkyl, aralkyl or cycloalkyl or a radical of the formula |

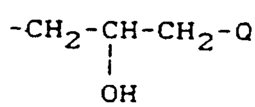

| | |
|---|---|
| | (Q = H, Cl, Br or $C_1$-$C_{15}$-alkyl), |
| $R^5$ | denotes hydrogen or $C_1$-$C_8$-alkyl, |
| $R^6$ | denotes $C_{12}$-$C_{24}$-alkyl, |
| $W^-$ | denotes an anion, |
| a | denotes 1-3 and the weight fractions b, c, d, e and f denote 0.1-0.8, 0-0.5, 0-0.5, 0-0.7 and 0-0.6, respectively, b + c + d + e + f being 1, and |
| g | should be so chosen that molecular weights $M_w$ of 5,000 to 1,000,000 result, |

**2.** Aqueous dispersions according to Claim 1, characterized in that they are obtainable in the presence of emulsifiers of the formula (I) wherein

| | |
|---|---|
| $R^2$ and $R^3$ | independently of one another represent methyl or ethyl, |
| $R^4$ | represents $C_1$-$C_6$-alkyl, benzyl, phenylethyl or cyclohexyl or a radical of the formula |

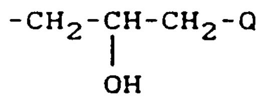

| | |
|---|---|
| $R^5$ | represents hydrogen or $C_1$-$C_8$-alkyl, |
| $R^6$ | represents $C_{15}$-$C_{22}$-alkyl and |
| $W^-$ | represents $Cl^-$, $Br^-$, 1/2 $SO_4{}^{2-}$, 1/3 $PO_4{}^{3-}$, $CH_3$-O-$SO_3{}^-$ or $CH_3$-$COO^-$, |

and the remaining symbols have the meaning indicated in Claim 1.

**3.** Aqueous dispersions according to Claim 1, characterized in that the perfluoroalkyl monomers copolymerized are compounds of the formulae

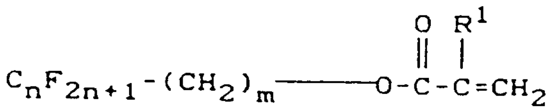

II

and

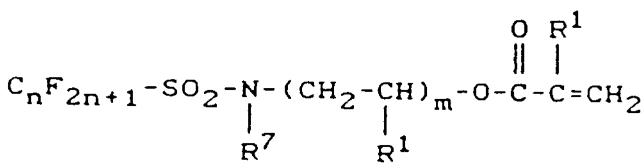

III

wherein

| | |
|---|---|
| $R^1$ | denotes hydrogen or methyl, |
| $R^7$ | denotes $C_1$-$C_4$-alkyl, |
| m | denotes 1 or 2 and |
| n | denotes 6-12. |

**4.** Aqueous dispersions according to Claim 1, characterized in that the perfluoroalkyl monomers are copolymerized with mixtures of monomers containing at least one component of the formula

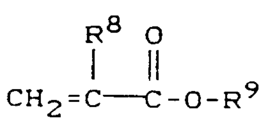

IV

**IV**

wherein

| | |
|---|---|
| $R^8$ | represents hydrogen, methyl or fluorine and |
| $R^9$ | represents a $C_8$-$C_{22}$-alkyl radical. |

**5.** Aqueous dispersions according to Claim 1, characterized in that the (graft) copolymerization is carried out at 50-100 °C.

**6.** Aqueous dispersions according to Claim 1, characterized in that the (graft) copolymerization is carried out in the presence of nonionic and/or cationic emulsifiers.

**7.** Process for the preparation of aqueous dispersions of (graft) copolymers formed from ethylenically unsaturated perfluoroalkyl monomers and ethylenically unsaturated monomers free from perfluoroalkyl groups according to Claim 1, characterized in that the (graft) copolymerization is carried out in the presence of water-soluble polymeric emulsifiers of the formula (I) in an amount of 0.1 to 7 % by weight,

relative to the amounts of monomer employed for the polymerization, and in the form of an emulsion polymerization in water with the production of fine dispersions having an average particle size of below 600 nm.

**8.** Process for finishing textile materials, characterized in that aqueous dispersions of Claim 1 are used.

**9.** Process for imparting a water-repellent and oleo-repellent finish to carpets composed of synthetic polyamides, characterized in that aqueous dispersions of Claim 1 are used.

## Revendications

**1.** Dispersions aqueuses de copolymères et copolymères greffés de monomères à insaturation éthylénique perfluoroalkylés et de monomères à insaturation éthylénique exempts de groupes perfluoroalkyle, caractérisées en ce qu'elles sont obtenues par copolymérisation (greffée) exécutée sous forme d'une polymérisation en émulsion dans l'eau, sous forme de dispersions en fines particules à une dimension de particule moyenne inférieure à 600 nm, en présence de 0,1 à 7% en poids, par rapport aux quantités de monomères mises en oeuvre à la polymérisation, d'agents émulsionnants polymères solubles dans l'eau de formule générale

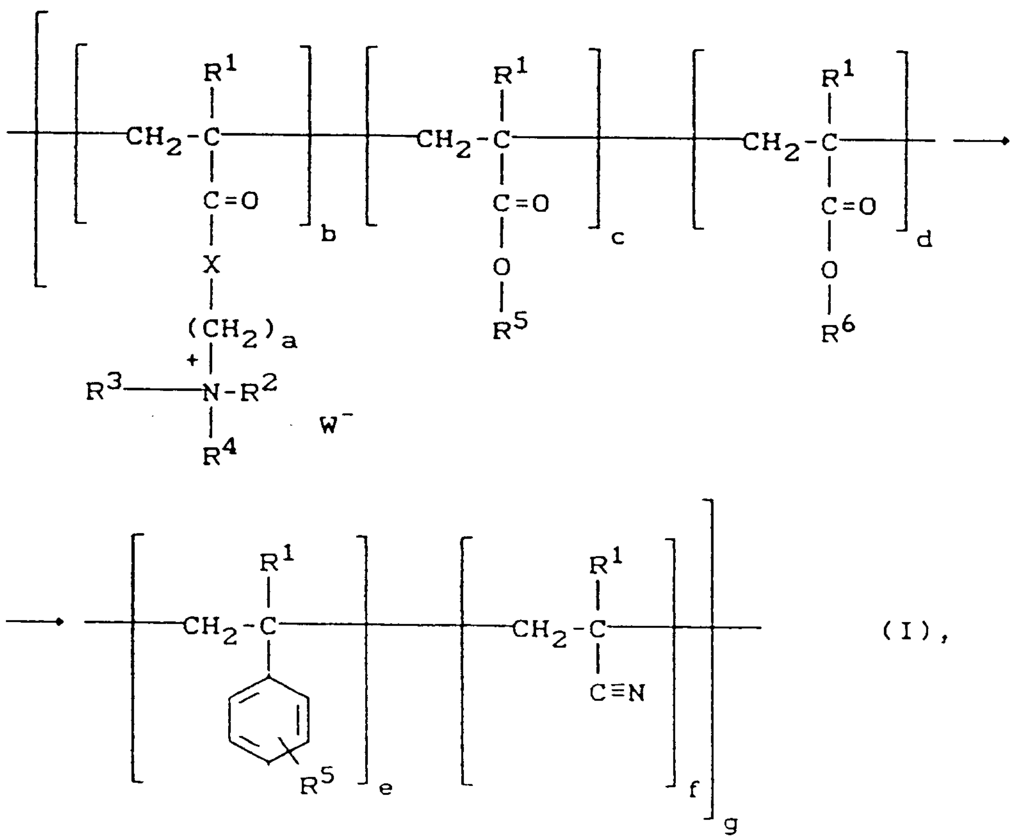

(I),

dans laquelle

X représente l'oxygène ou NH,

$R^1$ représente l'hydrogène ou un groupe méthyle,

$R^2$ représente un groupe alkyle en $C_1$-$C_4$,

$R^3$ représente un groupe alkyle en $C_1$-$C_4$,

$R^4$ représente H, un groupe alkyle en $C_1$-$C_{18}$, aralkyle ou cycloalkyle ou un groupe de formule

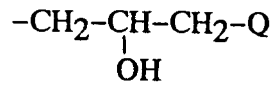

(Q = H, Cl, Br ou alkyle en $C_1$-$C_{15}$)

- $R^5$ représente l'hydrogène ou un groupe alkyle en $C_1$-$C_8$,
- $R^6$ représente un groupe alkyle en $C_{12}$-$C_{24}$,
- $W^-$ représente un anion,
- a est un nombre allant de 1 à 3, les nombres fractionnaires
- b va de 0,1 à 0,8,
- c de 0 à 0,5,
- d de 0 à 0,5,
- e de 0 à 0,7 et
- f de 0 à 0,6, avec b + c + d + e + f = 1, et
- g est choisi de manière à parvenir à des poids moléculaires $M_w$ de 5000 à 1 000 000.

**2.** Dispersions aqueuses selon revendication 1, caractérisées en ce qu'elles sont obtenues en présence d'agents émulsionnants de formule I, dans laquelle
$R^2$ et $R^3$ représentent, indépendamment l'un de l'autre, un groupe méthyle ou éthyle,
$R^4$ représente un groupe alkyle en $C_1$-$C_4$, benzyle, phényléthyle ou cyclohexyle ou un groupe de formule

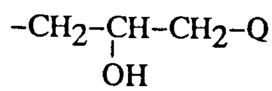

$R^5$ représente l'hydrogène ou un groupe alkyle en $C_1$-$C_8$,
$R^6$ représente un groupe alkyle en $C_{15}$-$C_{22}$ et
$W^-$ représente $Cl^-$, $Br^-$, 1/2 $SO_4^{2-}$, 1/3 $PO_4^{3-}$, $CH_3$-O-$SO_3^-$ ou $CH_3$-$COO^-$,
et les autres symboles ont les significations indiquées dans la revendication 1.

**3.** Dispersions aqueuses selon revendication 1, caractérisées en ce que l'on copolymérise en tant que monomères perfluoroalkylés des composés de formules

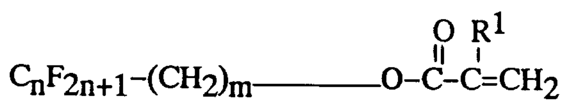 II

et

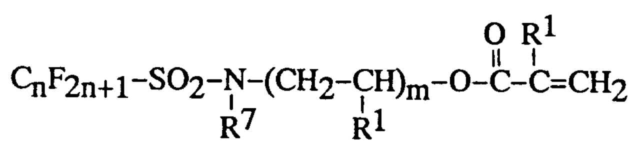 III

dans lesquelles

- $R^1$ représente l'hydrogène ou un groupe méthyle,
- $R^7$ représente un groupe alkyle en $C_1$-$C_4$,
- m est égal à 1 ou 2 et
- n est un nombre allant de 6 à 12.

**4.** Dispersions aqueuses selon revendication 1, caractérisées en ce que l'on copolymérise les monomères perfluoroalkylés avec des mélanges de monomères contenant au moins un composant de formule

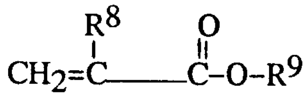

IV

dans laquelle

$R^8$ représente l'hydrogène, un groupe méthyle ou le fluor et

$R^9$ représente un groupe alkyle en $C_8$-$C_{22}$.

**5.** Dispersions aqueuses selon revendication 1, caractérisées en ce que la copolymérisation (greffée) est réalisée à des températures de 50 à 100 ° C.

**6.** Dispersions aqueuses selon revendication 1, caractérisées en ce que la copolymérisation (greffée) est effectuée en présence d'agents émulsionnants non ioniques et/ou cationiques.

**7.** Procédé de préparation des dispersions aqueuses de copolymères (greffés) de monomères à insaturation éthylénique perfluoroalkylés et de monomères à insaturation éthylénique exempts de groupes perfluoroalkyles selon revendication 1, caractérisé en ce que l'on procède à la copolymérisation (greffée) en présence d'agents émulsionnants polymères solubles dans l'eau de formule I en quantités de 0,1 à 7 % du poids des monomères mis en oeuvre à la polymérisation et sous forme d'une polymérisation en émulsion dans l'eau, avec obtention de dispersions en fines particules, à une dimension de particule moyenne inférieure à 600nm.

**8.** Procédé pour l'apprêtage de matières textiles, caractérisé en ce que l'on utilise à cet effet des dispersions aqueuses selon revendication 1.

**9.** Procédé pour l'apprêtage hydrofugeant et oléofugeant de moquettes en polyamide synthétiques, caractérisé en ce que l'on utilise à cet effet des dispersions aqueuses selon revendication 1.